**Europäisches Patentamt**

**European Patent Office**

**Office européen des brevets**

(19)

(11) Veröffentlichungsnummer: **0 005 227**
**B1**

(12) **EUROPÄISCHE PATENTSCHRIFT**

(45) Veröffentlichungstag der Patentschrift: **29.04.81**

(21) Anmeldenummer: **79101219.8**

(22) Anmeldetag: **23.04.79**

(51) Int. Cl.³: **A 01 N 57/12,
A 01 N 33/18,
C 07 F 9/117, C 07 C 79/28**

(54) Akarizide und insektizide Mittel sowie deren Verwendung zur Schädlingsbekämpfung.

(30) Priorität: **27.04.78 DE 2818497**

(43) Veröffentlichungstag der Anmeldung:
**14.11.79 Patentblatt 79/23**

(45) Bekanntmachung des Hinweises auf die Patenterteilung:
**29.04.81 Patentblatt 81/17**

(84) Benannte Vertragsstaaten:
**BE DE FR GB IT NL**

(56) Entgegenhaltungen:
**FR - A - 1 549 694
FR - A - 2 022 809**

(73) Patentinhaber: **HOECHST AKTIENGESELLSCHAFT
Zentrale Patentabteilung Postfach 80 03 20
D-6230 Frankfurt/Main 80 (DE)**

(72) Erfinder: **Emmel, Ludwig, Dr.
An der Oberpforte 1
D-6000 Frankfurt/Main 60 (DE)**
Erfinder: **Röchling, Hans, Dr.
Geierfeld 28
D-6232 Bad Soden am Taunus (DE)**
Erfinder: **Seyfarth, Günther
Parkstrasse 15/17
D-6233 Kelkheim (Taunus) (DE)**

# 0 005 227

### Akarizide und insektizide Mittel sowie deren Verwendung
### zur Schädlingsbekämpfung

Spinnmilben und Blattläuse sind bekanntlich bedeutende Schäldlinge im Zierpflanzen-, Acker- und Gemüsebau. Sie treten sowohl im Freiland als auch unter Glas auf und können durch ihre Saugfähigkeit und, was die Blattläuse anbelangt, durch Übertragung pflanzenpathogener Viren die Qualität und Quantität der Kulturpflanzen beträchtlich beeinträchtigen.

Häufig treten Blattläuse und Spinnmilben gemeisam als Parasiten von Kulturpflanzen auf, weshalb es erwünscht ist, diese auch gleichzeitig, d.h. in einem Arbeitsgang zu vernichten.

Heptenophos [(7-Chlor-bicyclo[3,2,0]hepta-2,6-dien-6-yl)-dimethylphosphat] ist als ein sehr wirksames Insektizid bekannt (vgl. H. Martin, "Pesticide Manual", 5. Auflage 1977, S. 295); Binapacryl [(2-(sec.-butyl)-4,6-dinitrophenyl-(3-methyl-crotonat)] und Dinobuton (2-(sec.-butyl-4,6-dinitrophenyl-isopropylcarbonat) sind beide gut wirksame Akarizide (a.a.O., S. 42 u. 208).

Bei der Untersuchung von Kombinationen der genannten Substanzen wurde nun gefunden, daß Mischungen von Heptenophos mit Binapacryl bzw. mit Dinobuton überraschenderweise synergistische Effekte sowohl bei Akariden als auch bei Insekten aufweisen; d.g. daß die insektizide Wirkung von Heptenophos durch Zusatz von (insektizid wenig wirksamen) Dinobuton oder Binapacryl und umgekehrt die akarizide Wirkung der beiden letztgenannten Stoffe durch Zusatz des gegen Spinnmilben wenig wirksamen Heptenophos erheblich erhöht wird.

Gegenstand der Erfindung sind somit Schädlingsbekämpfungsmittel, die gekennzeichnet sind durch einen Gehalt an (7-Chlor-bicyclo[3.2.0]hepta-2,6-dien-6-yl)-dimethylphosphat (I) in Kombination mit (2-(sec.-butyl)-4,6-dinitrophenyl-(3-methyl-crotonat) (II) oder (2-(sec.-butyl-4,6-dinitrophenyl-isopropylcarbonat) (III).

Das Mengenverhältnis (I:II bzw. I:III) der Wirkstoffe kann innerhalb weiter Grenzen schwanken, beispielsweise im Bereich von 1:20 bis 20:1.

Die erfindungsgemäßen Schädlingsbekämpfungsmittel besitzen eine ausgezeichnete Wirkung gegen Schadinsekten, gegen Akariden und deren Eier und können in weit geringeren Mengen bzw. Konzentrationen mit Erfolg eingesetzt werden als Schädlingsbekämpfungsmittel, die nur eine der beiden Wirkstoffkomponenten allein enthalten. Darüber hinaus sind die erfindungsgemäßen Mittel auch gegen Phosphorsäureesterresistente Akaridstämme wirksam.

Sie können ferner mit Erfolg gegen andere schädliche Gliederfüßler wie Bohrfliegen, Wanzen, Ameisen, Schmerläuse u.a. angewendet werden. Die Mittel haben sich bei zahlreichen Kulturpflanzen als gut verträglich erwiesen. Genannt seien Kopfsalat, Tomaten, Petersilie, Boretsch, zahlreiche Rosensorten, Dieffenbachien, Nelken, Erbsen, Kartoffeln, Buschbohnen, Ackerbohnen u.v.a. Sie können in Form üblicher Zubereitungen wie Emulsionskonzentraten, ULV—Lösungen, Dispersionen, Spritzpulvern, Stäuben, Sprays oder Granulaten formuliert werden.

Emulgierbare Konzentrate werden durch Auflösen der Wirkstoffe in geeigneten organischen Lösungsmitteln und Zusatz von nichtionischen oberflächenaktiven Mitteln als Emulgator, beispielsweise eines polyoxyäthylierten Alkylphenols oder eines polyoxyäthylierten Triglycerids bzw. Fettalkohols oder eines polyoxyäthylierten Oleyl- oder Stearylamins erhalten. Als Lösungsmittel hierfür kommen beispielsweise in Frage Toluol, Xylole, Chlorbenzole und andere höher siedende Aromaten, ferner Benzine oder Paraffinöle, Cyclohexanon, Dimethylformamid, Dimethylsulfoxid, Tetrahydrofuran, Dioxan, Diacetonalkohol, Äthylacetat, Isophoron.

Im Falle von "Ultra-Low-Volume" (ULV)—Formulierungen wendet man zweckmäßigerweise hochsiedende Lösungsmittel an, um die Verdunstungsrate beim Versprühen gering zu halten, z.B. höher siedende Paraffine, Ketone oder Ester sowie evtl. pflanzliche Öle.

Als Trägermaterialien für feste Formulierungen kommen vor allem mineralische Stoffe in Frage, z.B. Kieselsäuren und Silikate wie Kieselgur, Kaoline, Tonerden oder Talkum, Kreide oder Kieselkreiden, aber auch Zubereitungen dieser mineralischen Stoffe mit Hilfszusätzen wie Stearaten, Alkyl-, Aryl- oder Alkylarylsulfonaten, Ligninsulfonaten und ählichem. Darüber hinaus können weitere Netz-, Dispergier- und Haftstoffe sowie Mahlhilfsmittel der verschiedensten Art zum Zweck der anwendungsspezifischen Formulierung verwendet werden.

Der Gesamtwirkstoffgehalt der markfähigen Formulierungen beträgt ca. 10 bis 90 Gew.-%. Daneben enthalten sie die üblichen Haft-, Netz-, Dispergier-, Emulgier-, Penetrations-, Lösungsmittel-, Füll- und Trägerstoffe. Für den praktischen Einsatz kommen aber auch Tankmischungen aus den einzelnen Wirkstoffkomponenten in entsprechenden Mischungsverhältnissen in Frage.

Vor der eigentlichen Anwendung werden die genannten Emulsionskonzentrate, Spritzpulver oder Dispersionen mit einem geeigneten Verdünnungsmittel — gewöhnlich Wasser — weiter verdünnt und so auf eine für praktische Anwendung geeignete Wirkstoffkonzentration gebracht. Diese varriert wie üblich mit der Anwendungsart und den Klimabedingungen, insbesondere Temperatur und Feuchtigkeit, liegt jedoch allgemein, insbesondere z.B. bei Spritzpulvern, im Bereich von 0,005 bis 1,0 Gew.-% Gesamtwirkstoffanteil.

**0 005 227**

Formulierungsbeispiele

1. *Emulsionskonzentrat*
(Gew.-Verhältnis Heptenophos:Binapacryl (bzw. Dinobuton) = 1:1)

| | |
|---|---|
| Heptenophos | 25 |
| Binapacryl bzw. | |
| Dinobuton | 25 |
| Rizinusöl-polyglykoläther (40 AeO) | 6,4 |
| Triisobutylphenol-polyglykoläther (50 AeO) | 1,6 |
| Xylol | 42,0 |
| | 100 Gew.-% |

2. *Emulsionskonzentrat*
(Gew.-Verhältnis Heptenophos:Binapacryl (bzw. Dinobuton) = 1:4)

| | |
|---|---|
| Heptenophos | 10 |
| Dinobuton bzw. | |
| Binapacryl | 40 |
| Rizinusöl-polyglykoläther (40 AeO) | 6,4 |
| Triisobutylphenol-polyglykoläther (50 AeO) | 1,6 |
| Xylol | 42,0 |
| | 100 Gew.-% |

3. *Emulsionskonzentrat*
(Gew.-Verhältnis Heptenophos:Binapacryl (bzw. Dinobuton) = 1:10)

| | |
|---|---|
| Heptenophos | 4,5 |
| Binapacryl bzw. | |
| Dinobuton | 45,5 |
| Rizinusöl-polyglykoläther (40 AeO) | 6,4 |
| Triisobutylphenol-polyglykoläther (50 AeO) | 1,6 |
| Xylol | 42,0 |
| | 100 Gew.-% |

4. *Sprayformulierung*
(Gew.-Verhältnis Heptenophos:Binapacryl ca. 1:1)

| | |
|---|---|
| Heptenophos | 0,0526 |
| Binapacryl | 0,051 |
| Methylenchlorid | 59,8964 |
| Treibmittel | 40,0 |
| | 100,0000 Gew.-% |

3

5. *Sprayformulierung*
(Gew.-Verhältnis Heptenophos:Binapacryl 2:1)

| | |
|---|---|
| Heptenophos | 0,0526 |
| Binapacryl | 0,0253 |
| Methylenchlorid | 59,9221 |
| Treibmittel | 40,0000 |
| | 100,0000 Gew.-% |

Biologische Beispiele

Die Mischungen, bzw. vergleichsweise die Einzelkomponenten allein, wurden in Wasser emulgiert bzw. suspendiert und zwar so, daß die in den Tabellen 1, 2 und 3 angegebenen Wirkstoffkonzentrationen in Gew.-% erhalten wurden.

Diese Spritzbrühen wurden auf Pflanzen deckend gesprüht, auf denen Vollpopulationen der Schädlinge angesiedelt waren. Nach Antrocknung des Spritzbelags wurden die behandelten Pflanzen im Gewächshaus bei 20°C aufgestellt.

Die Kontrollen erfolgten 8 bzw. 3 Tage nach der Behandlung und erbrachten die in den Tabellen angegebenen Werte.

TABELLE 1

Versuchstier Spinnmilben (Tetranychus urticae) an Bohnen (Phaseolus vulgaris)

| Wirkstoff | Gew.–% AS i.d. Spritzbrühe | % Abtötung akarizid / ovizid nach 8 Tagen | |
|---|---|---|---|
| I Heptenophos | 0,06 | 5 | 0 |
| II Binapacryl | 0,006 | 86 | 85 |
| | 0,003 | 65 | 40 |
| I Heptenophos<br>+<br>II Binapacryl (10 : 1) | 0,06<br>+<br>0,006 | 100 | 98 |
| I Heptenophos<br>+<br>II Binapacryl (20 : 1) | 0,06<br>+<br>0,003 | 90 | 85 |

AS = Aktivsubstanz

**0 005 227**

TABELLE 2

Versuchstier Spinnmilben (Tetranyohus urticae) an Bohnen (Phaseolus vulgaris)

| Wirkstoff | Gew.–% AS i.d. Spritzbrühe | % Abtötung akarizid / ovizid nach 8 Tagen | |
|---|---|---|---|
| I  Heptenophos | 0,06 | 4 | 0 |
| III Dinobuton | 0,006 | 82 | 76 |
| | 0,003 | 52 | 35 |
| I<br>+<br>III (10:1) | 0,06<br>+<br>0,006 | 97 | 89 |
| I<br>+<br>III (20:1) | 0,06<br>+<br>0,003 | 85 | 62 |

TABELLE 3

Versuchstier Bohnenblattlaus (Doralis fabae) an Ackerbohnen (Vicia faba)

| Wirkstoff | Gew.–% AS i.d. Spritzbrühe | % tot nach 3 Tagen |
|---|---|---|
| I  Heptenophos | 0,0002 | 47 |
| II Binapacryl | 0,002 | 18 |
| | 0,001 | 5 |
| I<br>+<br>II (1:10) | 0,0002<br>+<br>0,002 | 92 |
| I<br>+<br>II (1:5) | 0,0002<br>+<br>0,001 | 73 |

5

# 0 005 227

**Patentansprüche**

1. Akarizide und insektizide Mittel, gekennzeichnet durch einen Gehalt an einer Kombination von (I) 7-Chlor-bicyclo[3,2,0]hepta-2,6-dien-6-yl-dimethylphosphat mit (II) 2-sec.Butyl-4,6-dinitrophenyl-3-methyl-crotonat oder (III) 2-sec.Butyl-4,6-dinitrophenyl-isopropylcarbonat.

2. Akarizide und insektizide Mittel gemäß Anspruch 1, dadurch gekennzeichnet, daß das Gewichtsverhältnis der Wirkstoffe I zu II bzw. III 1:20 bis 20:1 beträgt.

3. Verwendung von Wirkstoffkombinationen gemäß Ansprüchen 1 und 2 zur Schädlingsbekämpfung.

4. Verfahren zur Schädlingsbekämpfung, dadurch gekennzeichnet, daß man die befallenen Pflanzen, Böden, Substrate, Gegenstände oder Lebewesen mit wirksamen mengen der Mittel gemäß Ansprüchen 1 und 2 behandelt.


**Claims**

1. Acaricidal and insecticidal composition containing as active ingredient a combination of 7-chloro-bicyclo[3,2,0]hepta-2,6-dien-6-yl-dimethyl phosphate (I) with 2-sec.butyl-4,6-dinitrophenyl-3-methyl crotonate (II) or with 2-sec.butyl 4,6-dinitrophenyl-isopropylcarbonate (III).

2. Acaricidal and insecticidal composition as claimed in claim 1, wherein the proportion by weight of compound I to compound II or to compound III is in the range of from 1:20 to 20:1.

3. Method of using the active composition as claimed in claims 1 and 2 for the control of pests.

4. Process for combating pests, which comprises treating the infested plants, soils, substrates, objects or living beings with an effective amount of the composition as claimed in claims 1 and 2.


**Revendications**

1. Produits acaricides et insecticides caractérisés en ce qu'ils contiennent une association de phosphate de diméthyle et de chloro-7 bicyclo[3.2.0]heptadiène-2,6 yle-6 (composé I) avec du méthyl-3 crotonate de sec-butyl-2 dinitro-4,6 phényle (composé II) ou du carbonate d'isopropyle et de sec-butyl-2 dinitro-4,6 phényle (composé III).

2. Produits acaricides et insecticides selon la revendication 1, caractérisés en ce que le rapport pondéral des matières actives, c'est-à-dire I à II ou III, est compris entre 1:20 et 20:1.

3. Application d'associations de matières actives selon l'une revendications 1 et 2 pour la lutte contre des déprédateurs.

4. Procédé pour combattre des déprédateurs caractérise en ce qu'on traite par des quantités efficaces des produits selon l'une des revendications 1 et 2 les plantes, sols, substrats, objets ou êtres vivants atteints.